# EUROPEAN PATENT APPLICATION

(11) **EP 4 210 124 A2**
(43) Date of publication of application: **12.07.2023**
(21) Application number: 22204933.0
(22) Date of filing: 01.11.2022
(51) Int. Cl.: H01M 4/04, H01M 4/02

(54) **ELECTRODE, SECONDARY BATTERY, AND ELECTRODE MANUFACTURING METHOD**

(30) Priority: 11.01.2022 JP 2022002211
(71) Applicant: TOYOTA JIDOSHA KABUSHIKI KAISHA, Aichi-Ken 471-8571 (JP)
(72) Inventor: SHIONOYA, Haruka, Toyota-shi, 471-8571 (JP); KINTSU, Yusuke, Toyota-shi, 471-8571 (JP); MIMURA, Tetsuya, Toyota-shi, 471-8571 (JP); KONDO, Takeshi, Kariya-shi, 448-8671 (JP); KAWAMOTO, Yuta, Kariya-shi, 448-8671 (JP)
(74) Representative: D Young & Co LLP

(57) **Abstract**

An electrode (100) includes an active material layer (20). The active material layer (20) is provided with a first groove portion (21) and a second groove portion (22) on a surface. The first groove portion (21) has a first depth (dl). The second groove portion (22) has a second depth (d2). The second depth (d2) is shallower than the first depth (dl). Each of the first groove portion (21) and the second groove portion (22) extends linearly along the surface of the active material layer (20). The second groove portion (22) is adjacent to the first groove portion (21).

## Description

### BACKGROUND OF THE INVENTION

### 1. Field of the Invention

The present disclosure relates to an electrode and a secondary battery, as well as an electrode manufacturing method.

### 2. Description of Related Art

Japanese Unexamined Patent Application Publication No. 2018-041921 discloses a method for cleaning an active material piece generated during groove formation.

### SUMMARY OF THE INVENTION

In general, a secondary battery (which can be abbreviated as "battery") includes an electrode and an electrolytic solution. During a battery manufacturing process, the electrolytic solution is impregnated into the electrode. When the electrolyte solution does not permeate the electrode sufficiently, battery performance can deteriorate. Permeation of the electrolyte solution may take a long time. Accordingly, there is a need to reduce the permeation time.

Forming grooves on a surface of an electrode (active material layer) to facilitate the permeation of an electrolyte solution has been proposed. However, there is still room for improvement in this area.

The present disclosure promotes the permeation of an electrolytic solution.

Hereinafter, technical configurations and practical effects of the present disclosure will be described. However, the action mechanism of the present specification includes estimations. The action mechanism does not limit the technical scope of the present disclosure.

An electrode according to a first aspect of the present disclosure includes an active material layer. The active material layer is provided with a first groove portion and a second groove portion on a surface. The first groove portion has a first depth. The second groove portion has a second depth. The second depth is shallower than the first depth. Each of the first groove portion and the second groove portion extends linearly along the surface of the active material layer. The second groove portion is adjacent to the first groove portion.

A groove having a certain depth is formed on the surface of the active material layer. It is also considered that the deeper the groove, the more advantageous in terms of the permeation of the electrolytic solution.

In the first aspect of the present disclosure, two types of grooves having different depths are formed. That is, the active material layer is provided with the first groove portion (deep groove) and the second groove portion (shallow groove) on the surface. According to the new findings of the present disclosure, the combination of the deep groove and the shallow groove can further promote the permeation of the electrolytic solution. That is, it is expected that the membrane flow of the electrolytic solution spreads on the surface of the active material layer in a short time via the shallow groove. Furthermore, the electrolytic solution spread on the surface of the active material layer is expected to permeate in a thickness direction of the active material layer via the deep groove. It is considered that the synergistic effect of these actions can promote the permeation of the electrolytic solution.

In the first aspect, the active material layer may be provided with a plurality of the first groove portions and a plurality of the second groove portions on the surface. In planar view, the first groove portions and the second groove portions may be alternately provided. This is because this may promote the permeation of the electrolyte solution.

In the first aspect, the ratio of the first depth to the second depth may be within a range of 2 to 370. This is because this may promote the permeation of the electrolyte solution.

In the first aspect, the first groove portion may have a first width. The second groove portion may have a second width. A ratio of the second width to the first width may be within a range of 10 to 100. This is because this may promote the permeation of the electrolyte solution.

In the first aspect, the electrode may further include a base material. The active material layer may be arranged on a surface of the base material.

A secondary battery according to a second aspect of the present disclosure includes the electrode and an electrolytic solution. It is expected that the permeation time of the electrolytic solution will be shortened when manufacturing the secondary battery.

An electrode manufacturing method according to a third aspect of the present disclosure includes manufacturing an electrode by forming an active material layer and forming a first groove portion and a second groove portion on a surface of the active material layer. The first groove portion has a first depth. The second groove portion has a second depth. The second depth is shallower than the first depth. Each of the first groove portion and the second groove portion extends linearly along the surface of the active material layer. The second groove portion is adjacent to the first groove portion.

In the manufacturing method, the electrode according to the first aspect can be manufactured.

In the third aspect, the forming of the first groove portion and the second groove portion may include pressing a concave-convex mold against the surface of the active material layer. The concave-convex mold may include a convex portion and a concave portion. The concave portion may be adjacent to the convex portion. The convex portion may be pressed against the surface of the active material layer such that a gap is formed between the concave portion and the surface of the active material layer.

It is conceivable to form a groove by a concave-convex mold (for example, an embossed roll). Normally, the bottom surface of the concave portion is also pressed against the surface of the active material layer in order to form a deep groove and keep the surface of the active material layer flat. In the manufacturing method, the gap is formed between the concave portion and the surface of the active material layer. A part of the active material layer is extruded into the gap. As a result, a protrusion (protrusion portion) adjacent to the first groove portion (deep groove) is formed. The second groove portion (shallow groove) can be formed between the protrusion portions.

In the third aspect, the forming of the first groove portion and the second groove portion may include irradiating the surface of the active material layer with a laser beam. The first groove portion may be formed by cutting the active material layer by the laser beam. A protrusion portion may be formed by depositing shavings of the active material layer, adjacent to the first groove portion.

For example, the first groove portion (deep groove) may be formed by laser processing. Normally, shavings generated by grooving are removed. In the manufacturing method, shavings are not removed and are used as the protrusion portion. The second groove portion (shallow groove) can be formed between the protrusion portions.

For example, as in JP 2018-041921 A, when the shavings are cleaned (discarded), the energy density can decrease. In the manufacturing method, shavings (a part of the active material layer) are not discarded and remain in the active material layer, such that it is considered that the energy density is unlikely to decrease.

Hereinafter, an embodiment (hereinafter, can be abbreviated as "the present embodiment") of the present disclosure and an example (hereinafter, can be abbreviated as "the present example") of the present disclosure will be described. However, the present embodiment and the present example do not limit the technical scope of the present disclosure.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view illustrating an electrode in a present embodiment;
FIG. 2 is a schematic cross-sectional view of an active material layer;
FIG. 3 is a schematic flowchart of an electrode manufacturing method in the present embodiment;
FIG. 4 is a schematic view illustrating a first example of grooving;
FIG. 5 is a schematic view illustrating a second example of grooving; and
FIG. 6 is a schematic cross-sectional view illustrating a secondary battery in the present embodiment.

### DETAILED DESCRIPTION OF EMBODIMENTS

### Definition of Terms

In the present specification, the description of "including", "containing", "having", and variations thereof (for example, "constituted of") is an open-ended format. The open-ended format may or may not include additional elements in addition to the required elements. The description "consisting of" is a closed format. However, even in the closed format, additional elements that are normally associated impurities or that are irrelevant to the disclosed art are not excluded. The description of "substantially consists of ..." is a semi-closed format. In the semi-closed format, the addition of elements that do not substantially affect the basic and novel properties of the disclosed art is permissible.

In the present specification, expressions such as "may" and "can" are used in the permissible sense, which means that " there is a possibility of something", rather than the obligatory sense, which means that "something must be done".

In the present specification, the execution order of a plurality of steps, movements, operations and the like included in various methods is not limited to the description order unless otherwise specified. For example, a plurality of steps may proceed simultaneously. For example, a plurality of steps may be in phases with each other.

In the present specification, a numerical range such as "m% to n%" includes an upper limit value and a lower limit value unless otherwise specified. That is, "m% to n%" indicates a numerical range of "m% or more and n% or less". Further, "m% or more and n% or less" includes "more than m% and less than n%". Further, a numerical value appropriately selected from the numerical range may be set as a new upper limit value or a lower limit value. For example, a new numerical range may be set by appropriately combining a numerical value within the numerical range with a numerical value described in another part in the present specification, in a table, in a figure, or the like.

In the present specification, all numerical values are modified by the term "about". The term "about" can mean, for example, ±5%, ±3%, ±1%, and the like. All numerical values can be approximate values that can change depending on the usage pattern of the disclosed art. All numbers may be displayed in significant figures. The measured value can be an average value in multiple measurements. The number of measurements may be three or more, five or more, or 10 or more. Generally, it is expected that the reliability of the average value improves as the number of measurements increases. The measured value may be rounded off based on the number of significant digits. The measured value may include, for example, an error due to the detection limit of a measuring device or the like.

In the present specification, when a compound is represented by a stoichiometric composition formula (for example, "LiCoO₂" or the like), the stoichiometric composition formula is only a representative example of the compound. The compound may have a non-stoichiometric composition. For example, when lithium cobalt oxide is described as "LiCoO₂", unless otherwise specified, lithium cobalt oxide is not limited to the composition ratio of "Li/Co/O = 1/1/2" and can include Li, Co, and O in any composition ratio. Furthermore, doping, substitution, and the like with trace elements can be tolerated.

Geometric terms (for example, "parallel", "vertical", "orthogonal") in the present specification should not be understood in a strict sense. For example, "parallel" may deviate slightly from "parallel" in the strict sense. Geometric terms in the present specification can include tolerances or errors for design, work, or manufacturing. The dimensional relationships in each drawing may not match the actual dimensional relationships. In order to help with understanding the disclosed art, the dimensional relations (length, width, thickness, and the like) in each drawing may be changed. Furthermore, some configurations may be omitted.

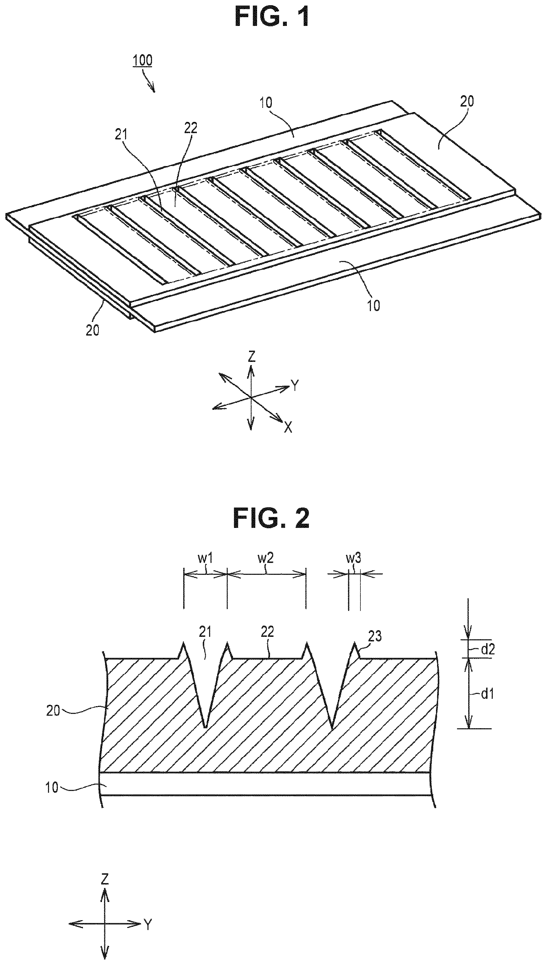

As used in this specification, "planar view" indicates that a target object is viewed with a line of sight parallel to a thickness direction of the target object. For example, viewing an active material layer 20 from a Z-axis direction in FIG. 1 corresponds to a planar view of the active material layer 20.

The "depth" of a groove portion in the present specification indicates the maximum depth in a cross section orthogonal to a direction (axial direction of the groove portion) in which the groove portion extends. The "width" of the groove portion in the present specification indicates the maximum width in a cross section orthogonal to the axial direction of the groove portion.

As used in the present specification, the "D50" is defined as a particle size in which the cumulative frequency from the smaller particle size reaches 50% in the volume-based particle size distribution. D50 can be measured by a laser diffraction type particle size distribution measuring device.

As used in the present specification, the term "electrode" is a general term for a positive electrode and a negative electrode. The electrode may be a positive electrode or a negative electrode.

As used in the present specification, the term "secondary battery" refers to a battery that can be charged and discharged. The secondary battery can be any battery system as long as it includes an electrolytic solution. The secondary battery may be, for example, a lithium ion battery. The present embodiment is an application example of a lithium ion battery. However, the technique of the present disclosure may be applied to a battery system other than a lithium ion battery.

### Electrode

FIG. 1 is a schematic view illustrating an electrode in the present embodiment. Hereinafter, the "electrode in the present embodiment" can be abbreviated as the "present electrode". The present electrode 100 is for a secondary battery. The secondary battery will be described below. The present electrode 100 is in the shape of a sheet. The electrode 100 includes the active material layer 20. The present electrode 100 may further include a base material 10 and the like.

### Base Material

The base material 10 is a support body for the active material layer 20. The base material 10 may be, for example, in the form of a sheet or in the form of a mesh. The base material 10 may have, for example, a strip-shaped planar shape. The base material 10 may have conductivity. The base material 10 may function as a current collector. A part of the base material 10 may be exposed from the active material layer 20. For example, a current collector member may be bonded to the portion where the base material 10 is exposed.

The base material 10 can have any thickness. The base material 10 may have a thickness of, for example, 5 µm to 50 µm, or may have a thickness of 5 µm to 20 µm.

The base material 10 may include, for example, a metal foil or the like. The base material 10 may include, for example, at least one selected from the group consisting of aluminum (Al), copper (Cu), nickel (Ni), titanium (Ti), chromium (Cr) and iron (Fe). The base material 10 may include at least one selected from the group consisting of, for example, Al foil, Al alloy foil, Cu foil, Cu alloy foil, Ni foil, Ni alloy foil, Ti foil, and stainless steel foil. When the present electrode 100 is a positive electrode, the base material 10 may include, for example, an Al foil or the like. When the present electrode 100 is a negative electrode, the base material 10 may include, for example, Cu foil or the like.

### Active Material Layer

The active material layer 20 is a layer including an active material. The active material layer 20 may be arranged on the surface of the base material 10, for example. The active material layer 20 may be arranged on only one side of the base material 10, or may be arranged on both the front and back sides. The active material layer 20 can have any thickness. The active material layer 20 may have a thickness of, for example, 5 µm to 1000 µm, a thickness of 10 µm to 500 µm, or a thickness of 50 µm to 250 µm.

### First and Second Groove Portions

A first groove portion 21 and a second groove portion 22 are formed on the surface of the active material layer 20. The first groove portion 21 is a relatively deep groove. The first groove portion 21 can promote the permeation of the electrolytic solution in a depth direction. The second groove portion 22 is a relatively shallow groove. The second groove portion 22 can promote the permeation of the electrolytic solution in a plane direction. The combination of the first groove portion 21 and the second groove portion 22 can synergistically promote the permeation of the electrolytic solution.

Each of the first groove portion 21 and the second groove portion 22 extends linearly along the surface of the active material layer 20. Each of the first groove portion 21 and the second groove portion 22 may extend linearly, for example. Each of the first groove portion 21 and the second groove portion 22 may be in the form of a curved line, for example. Each of the first groove portion 21 and the second groove portion 22 may meander, for example.

Each of the first groove portion 21 and the second groove portion 22 may have any length. Each of the first groove portion 21 and the second groove portion 22 may have a length of, for example, 1 mm to 1000 mm, or may have a length of 1 mm to 100 mm.

Each of the first groove portion 21 and the second groove portion 22 may extend so as to cross the surface of the active material layer 20. Each of the first groove portion 21 and the second groove portion 22 may have an opening portion on a peripheral edge (side surface) of the active material layer 20. The side surface of the active material layer 20 may be an inclined surface.

One first groove portion 21 may be formed alone. One second groove portion 22 may be formed alone. A plurality of first groove portions 21 and second groove portions 22 may be formed.

The second groove portion 22 is adjacent to the first groove portion 21. In planar view (XY plane), the first groove portion 21 and the second groove portion 22 may be arranged alternately.

FIG. 2 is a schematic cross-sectional view of the active material layer. FIG. 2 illustrates a cross section orthogonal to the axial direction of each groove portion. The first groove portion 21 has a first depth d1. The second groove portion 22 has a second depth d2. The second depth d2 is shallower than the first depth d1. The ratio (hereinafter, also referred to as "depth ratio") of the first depth d1 to the second depth d2 may be, for example, within a range of 2 to 370. The depth ratio may be, for example, within a range of 5 to 200, 5 to 100, or 5 to 10.

The first depth d1 may be, for example, 20 µm to 350 µm, 20 µm to 200 µm, or 20 µm to 100 µm. The second depth d2 may be, for example, 1 µm to 20 µm or 1 µm to 10 µm.

The first groove portion 21 has a first width w1. The second groove portion 22 has a second width w2. The ratio (hereinafter, also referred to as "width ratio") of the second width w2 to the first width w1 may be, for example, within a range of 10 to 100. The width ratio may be, for example, within a range of 20 to 80 or 40 to 60.

The first width w1 may be, for example, 40 µm to 400 µm or 100 µm to 300 µm. The second width w2 may be, for example, 0.1 mm to 10 mm, 0.5 mm to 5 mm, or 1 mm to 2 mm.

The first groove portion 21 may have, for example, a tapered cross-sectional shape. That is, the deeper the position, the narrower the width of the first groove portion 21 may be. The cross-sectional shape of the first groove portion 21 may be, for example, V-shaped, U-shaped, or rectangular.

The second groove portion 22 may have, for example, a flat bottom surface. The bottom surface of the second groove portion 22 may be curved, for example.

The second groove portion 22 is interposed between two protrusion portions 23. The height of the protrusion portion 23 corresponds to the second depth d2 of the second groove portion 22. The protrusion portion 23 has a third width w3. The third width w3 may be, for example, 5 µm to 60 µm, 5 µm to 30 µm, or 5 µm to 20 µm.

### Composition

The active material layer 20 includes an active material. The active material layer 20 may further include, for example, a binder or a conductive material in addition to the active material.

The active material may be, for example, in the form of particles. The active material may have, for example, a D50 of 1 µm to 30 µm. The active material may include, for example, a positive electrode active material. The positive electrode active material can store and release lithium (Li) ions at a higher potential than that of the negative electrode active material. The positive electrode active material can include any component. The positive electrode active material may include, for example, at least one selected from the group consisting of LiCo02, LiNi02, LiMn02, LiMn₂O₄, Li(NiCoMn)O₂, Li(NiCoAl)O₂, and LiFePO₄. For example, "(NiCoMn)" in "Li(NiCoMn)O₂" indicates that the total composition ratio in parentheses is 1. The amount of individual components is appropriately selected as long as the total is 1. Li(NiCoMn)O₂ may include, for example, Li(Ni_{1/3}Co_{1/3}Mn_{1/3})O₂, Li(Ni_{0.5}Co_{0.2}Mn_{0.3})O₂, Li(Ni_{0.8}Co_{0.1}Mn_{0.1})O₂, and the like.

The active material may include, for example, a negative electrode active material. The negative electrode active material can store and release Li ions at a lower potential than that of the positive electrode active material. The negative electrode active material can include any component. The negative electrode active material may include, for example, at least one selected from the group consisting of graphite, soft carbon, hard carbon, silicon, silicon oxide, silicon-based alloy, tin, tin oxide, tin-based alloy, and Li₄Ti₅O₁₂.

The conductive material can form an electron conduction path. The blending amount of the conductive material may be, for example, 0.1 parts by mass to 10 parts by mass with respect to 100 parts by mass of the active material. The conductive material can include any component. The conductive material may include at least one selected from the group consisting of, for example, carbon black, vapor-grown carbon fibers, carbon nanotubes, and graphene flakes.

Binders can bond solid materials together. The blending amount of the binder may be, for example, 0.1 parts by mass to 10 parts by mass with respect to 100 parts by mass of the active material. The binder can include any component. The binder may include, for example, at least one selected from the group consisting of polyvinylidene fluoride (PVDF), polytetrafluoroethylene (PTFE), vinylidene fluoride-hexafluoropropylene copolymer (PVDF-HFP), styrene butadiene rubber (SBR), carboxymethyl cellulose (CMC), polyimide (PI), polyamide-imide (PAI), and polyacrylic acid (PAA).

### Electrode Manufacturing Method

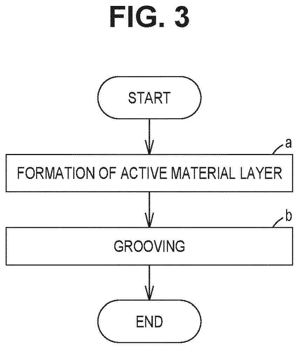

FIG. 3 is a schematic flowchart of the electrode manufacturing method in the present embodiment. Hereinafter, the "electrode manufacturing method in the present embodiment" can be abbreviated as "the present manufacturing method". The present manufacturing method includes "(a) formation of active material layer" and "(b) grooving". The present electrode 100 can be manufactured by the present manufacturing method.

### (a) Formation of Active Material Layer

The present manufacturing method includes forming the active material layer 20. The active material layer 20 can be formed by any method. For example, a slurry including an active material may be produced. For example, a slurry may be produced by mixing an active material, a conductive material, a binder, and a dispersion medium. For example, an appropriate dispersion medium can be selected depending on the type of active material, binder, or the like. The dispersion medium may include, for example, water, N-methyl-pyrrolidone (NMP), and the like.

For example, the active material layer 20 may be formed by applying the slurry to the surface of the base material 10 with a die coater.

The present manufacturing method may include drying the active material layer 20. For example, the active material layer 20 may be dried by a hot air drying oven. The present manufacturing method may include compressing the active material layer 20. For example, the active material layer 20 may be compressed by a roll press.

### (b) Grooving

The present manufacturing method includes manufacturing the present electrode 100 by forming the first groove portion 21 and the second groove portion 22 on the surface of the active material layer 20. The first groove portion 21 and the second groove portion 22 can be formed by any method.

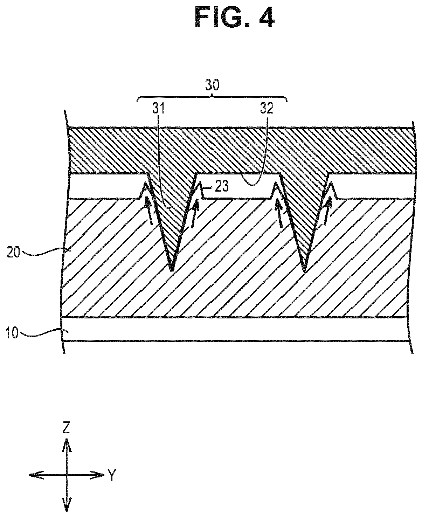

FIG. 4 is a schematic view illustrating a first example of grooving. For example, the concave-convex mold 30 may be pressed against the surface of the active material layer 20. The concave-convex mold 30 may be, for example, a plate shape or a roll shape. The concave-convex mold 30 may be, for example, an embossed roll.

The concave-convex mold 30 includes a convex portion 31 and a concave portion 32. The convex portion 31 protrudes as compared with the concave portion 32. Corresponding to the shape of the convex portion 31, the first groove portion 21 can be formed. The cross-sectional shape of the convex portion 31 may be, for example, tapered or rectangular. The concave portion 32 is recessed as compared with the convex portion 31. The concave portion 32 is adjacent to the convex portion 31. The bottom surface of the concave portion 32 may be flat, curved, or tapered.

The convex portion 31 is pressed against the surface of the active material layer 20 such that a gap is formed between the concave portion 32 and the surface of the active material layer 20. The first groove portion 21 can be formed by pressing the convex portion 31 against the surface of the active material layer 20. Further, a part of the active material layer 20 may be extruded into the gap between the concave portion 32 and the surface of the active material layer 20. This can form the protrusion portion 23. The second groove portion 22 can be formed between the protrusion portions 23. That is, the first groove portion 21 and the second groove portion 22 can be formed.

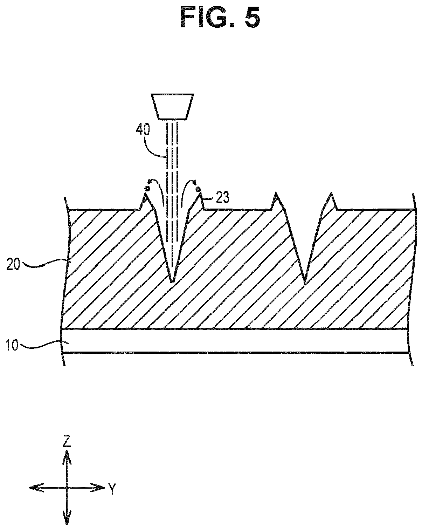

FIG. 5 is a schematic view illustrating a second example of grooving. For example, a groove may be formed by laser processing. That is, the surface of the active material layer 20 may be irradiated with a laser beam 40. The laser beam 40 can scrape the active material layer 20 to form the first groove portion 21. Further, shavings of the active material layer 20 can be deposited adjacent to the first groove portion 21 to form the protrusion portion 23. The second groove portion 22 can be formed between the protrusion portions 23. That is, the first groove portion 21 and the second groove portion 22 can be formed.

For example, a laser processing machine such as a laser marker may be used. For example, the laser beam 40 having favorable absorption of an active material may be used. For example, a YAG laser beam or the like may be used. A fundamental wave (wavelength 1060 nm) may be used or a harmonic may be used. For example, a triple wave (wavelength 355 nm) may be used. The output of the laser beam 40 may be, for example, 4 W to 10 W.

The present electrode 100 is manufactured by forming the first groove portion 21 and the second groove portion 22. The present electrode 100 may be cut, for example, according to the design of the secondary battery.

### Secondary Battery

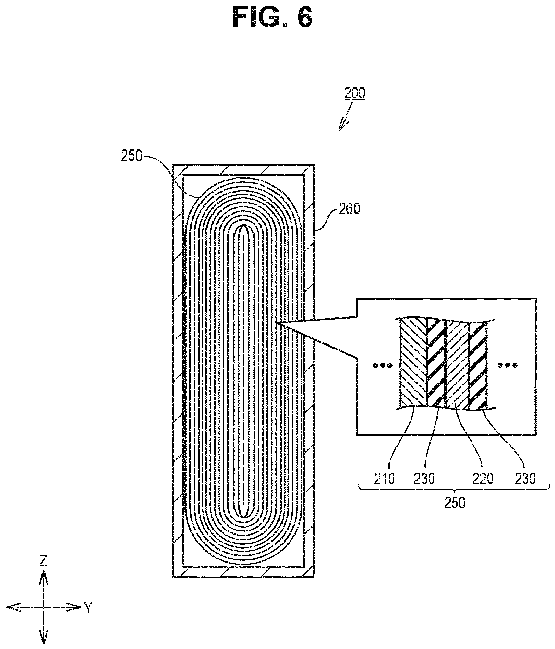

FIG. 6 is a schematic cross-sectional view illustrating a secondary battery in the present embodiment. Hereinafter, the "secondary battery in the present embodiment" may be abbreviated as the "present battery".

The present battery 200 includes a case 260. The case 260 may be hermetically sealed. The case 260 can have any form. The case 260 may be, for example, a pouch made of a metal foil laminated film. The case 260 may be, for example, a metal container. The case 260 may be, for example, square or cylindrical. The case 260 may include, for example, Al.

The case 260 includes an electrode group 250 and an electrolytic solution (not illustrated). The electrolytic solution has permeated the electrode group 250. A part of the electrolytic solution may be stored in the bottom of the case 260. The electrode group 250 can have any form. In FIG. 6, a winding type electrode group 250 is illustrated as an example. The electrode group 250 may be, for example, a laminated type. The electrode group 250 includes a positive electrode 210 and a negative electrode 220. The electrode group 250 may further include a separator 230. At least one of the positive electrode 210 and the negative electrode 220 is the above-described present electrode 100. That is, the present battery 200 includes the present electrode 100 and the electrolytic solution.

The separator 230 may intervene between the positive electrode 210 and the negative electrode 220. The separator 230 is electrically insulating. The separator 230 is porous. The separator 230 may be made of, for example, polyolefin.

### Electrolytic Solution

The electrolytic solution is a liquid electrolyte. The electrolyte can be a viscous fluid. The electrolytic solution may have a density of, for example, 500 kg/cm³ to 2000 kg/cm³. The electrolytic solution includes a lithium salt and a solvent. The electrolytic solution may further include any additive.

The lithium salt is dissolved in the solvent. The lithium salt may include at least one selected from the group consisting of, for example, LiPF₆, LiBF₄, and Li(FSO₂)₂N. The concentration of the lithium salt may be, for example, 0.5 mol/L to 2 mol/L.

The solvent may include any component. The solvent may include, for example, at least one selected from the group consisting of ethylene carbonate (EC), propylene carbonate (PC), butylene carbonate (BC), ethylmethyl carbonate (EMC), dimethyl carbonate (DMC), and diethyl carbonate (DEC). The additive may include at least one selected from the group consisting of, for example, vinylene carbonate (VC), vinyl ethylene carbonate (VEC), 1,3-propanesalton (PS), cyclohexylbenzene (CHB), tert-amylbenzene (TAB), and lithium bisoxalate borate (LiBOB).

### Experiment 1

Electrodes according to No. 1 to 3 shown in Table 1 below were manufactured. Hereinafter, for example, the "electrode according to No. 1" may be abbreviated as "No. 1".

A predetermined amount of electrolytic solution was dropped on the surface of the active material layer. The electrolytic solution permeated the active material layer. The time (total permeation time) until the permeation of the electrolytic solution was completed in the entire active material layer was measured. Completion of permeation was visually confirmed. The results are shown in Table 1 below.

**Table 1**

| | Active material layer | Total permeation time [s] |
|---|---|---|
| No. 1 | no groove | 2400 |
| No. 2 | first groove portion (deep groove) | 142 |
| No. 3 | first groove portion (deep groove) + second groove portion (shallow groove) | 35 |

From the comparison between No. 1 and No. 2, the total permeation time tends to be shortened by forming a deep groove in the active material layer.

From the comparison between No. 2 and No. 3, the formation of a shallow groove in addition to the deep groove tends to further shorten the total permeation time.

### Experiment 2

In a simple model assuming No. 2 and No. 3 of the experiment 1, the time taken (surface permeation time) for the electrolytic solution to spread on the surface of the active material layer was calculated. In the calculation, the density of the electrolytic solution was assumed to be 1300 kg/m³. The results are shown in Table 2 below.

**Table 2**

| | | No. 2 | No. 3 |
|---|---|---|---|
| First groove portion (deep groove) | first length L1 [mm] | 10 | 10 |
| | first depth d1 [µm] | 30 | 35 |
| | first width w1 [µm] | 30 | 35 |
| | average flow rate U1 [m/s] | 1.10 × 10⁻³ | 1.28 × 10⁻³ |
| Second groove portion (shallow groove) | second length L2 [mm] | | 10 |
| | second depth d2 [µm] | | 5 |
| | second width w2 [µm] | | 2000 |
| | average flow rate U2 [m/s] | | 7.34 × 10⁻² |
| Surface permeation time [s] | | 36.4 | 7.8 |

The addition of the shallow groove reduced the surface permeation time by 79%. This result is similar to the reduction rate of the total permeation time between No. 2 and No. 3 of the experiment 1.

The present embodiment and the present example are exemplary in all respects. The present embodiment and the present example are not limited. The technical scope of the present disclosure includes the meaning equivalent to the description of the scope of claims and all modifications within the scope thereof. For example, it was planned from the beginning that any configurations are extracted from the present embodiment and the present example and they are appropriately combined.

## Claims

1. An electrode (100) comprising:
an active material layer (20), wherein:
the active material layer (20) is provided with a first groove portion (21) and a second groove portion (22) on a surface;
the first groove portion (21) has a first depth (d1);
the second groove portion (22) has a second depth (d2);
the second depth (d2) is shallower than the first depth (d1);
each of the first groove portion (21) and the second groove portion (22) extends linearly along the surface of the active material layer (20); and
the second groove portion (22) is adjacent to the first groove portion (21).

2. The electrode (100) according to claim 1, wherein:
the active material layer (20) is provided with a plurality of first groove portions (21) and a plurality of second groove portions (22) on the surface; and
in planar view, the first groove portions (21) and the second groove portions (22) are alternately provided.

3. The electrode (100) according to claim 1 or 2, wherein a ratio of the first depth (d1) to the second depth (d2) is within a range of 2 to 370.

4. The electrode (100) according to any one of claims 1 to 3, wherein:
the first groove portion (21) has a first width (w1);
the second groove portion (22) has a second width (w2); and
a ratio of the second width (w2) to the first width (w1) is within a range of 10 to 100.

5. The electrode (100) according to any one of claims 1 to 4, further comprising a base material (10),
wherein the active material layer (20) is arranged on a surface of the base material (10).

6. A secondary battery (200) comprising:
the electrode (100) according to any one of claims 1 to 5; and
an electrolytic solution.

7. An electrode manufacturing method comprising:
manufacturing an electrode (100) by forming an active material layer (20); and
forming a first groove portion (21) and a second groove portion (22) on a surface of the active material layer (20), wherein:
the first groove portion (21) has a first depth (d1);
the second groove portion (22) has a second depth (d2);
the second depth (d2) is shallower than the first depth (d1);
each of the first groove portion (21) and the second groove portion (22) extends linearly along the surface of the active material layer (20); and
the second groove portion (22) is adjacent to the first groove portion (21).

8. The electrode manufacturing method according to claim 7, wherein:
the forming of the first groove portion (21) and the second groove portion (22) includes pressing a concave-convex mold (30) against the surface of the active material layer (20);
the concave-convex mold (30) includes a convex portion (31) and a concave portion (32);
the concave portion (32) is adjacent to the convex portion (31); and
the convex portion (31) is pressed against the surface of the active material layer (20) such that a gap is formed between the concave portion (32) and the surface of the active material layer (20).

9. The electrode manufacturing method according to claim 7, wherein:
the forming of the first groove portion (21) and the second groove portion (22) includes irradiating the surface of the active material layer (20) with a laser beam (40);
the first groove portion (21) is formed by cutting the active material layer (20) by the laser beam (40); and
a protrusion portion (23) is formed by depositing shavings of the active material layer (20), adjacent to the first groove portion (21).
